# EUROPEAN PATENT SPECIFICATION

(11) **EP 0 286 070 B1**
(45) Date of publication and mention of the grant of the patent: **07.01.1993**
(21) Application number: 88105481.1
(22) Date of filing: 06.04.1988
(51) Int. Cl.: G11B 13/04, G11B 11/10

(54) **A magnetic bias coil of a magneto-optical recording apparatus**
Vorspann-Magnetfeldspule eines magnetooptischen Aufzeichnungsgerätes
Bobine de polarisation magnétique d'un appareil d'enregistrement magnéto-optique

(30) Priority: 10.04.1987 JP 55202/87 U
(43) Date of publication of application: 12.10.1988
(73) Proprietor: FUJITSU LIMITED, Kawasaki-shi, Kanagawa 211 (JP)
(72) Inventor: Ichihara, Junichi, Yokohama-shi Kanagawa, 227 (JP)
(74) Representative: Schmidt-Evers, Jürgen, Dipl.-Ing.

(56) References cited:
- EP-A- 0 126 596
- EP-A- 0 153 676
- EP-A- 0 179 671
- GB-A- 2 095 887
- US-A- 3 626 114

## Description

This invention relates to an improvement of a magnetic circuit of an electromagnetic bias coil used in a magneto-optical recording disk apparatus.

### Description of the Related Art

In an erasable magneto-optical recording disk apparatus, a recorded data on a perpendicular magnetic anisotropic material of the disk can be erased, then a new data can be written thereon again. In addition to that, data recording capacity of this apparatus is advantageously higher than that of the conventional magnetic data recording apparatus, the magnetic disk. Therefore, the magneto-optical recording disk apparatus in place of the conventional magnetic disk apparatus has been extensively studied and developed.

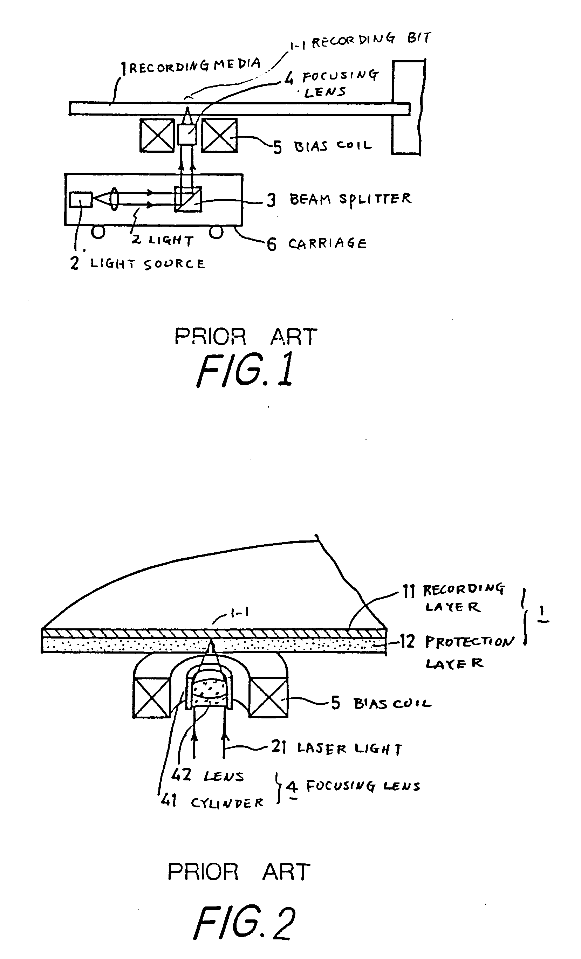

A typical prior art erasable magneto-optical recording disk apparatus is schematically illustrates in FIG. 1, where parts having no relation with the explanation of the invention are omitted. In the figure, the numeral 1 denotes a recording media made of a film of a perpendicular magnetic anisotropic material, such as TeFeCo (tellurium-iron-cobalt). A light 2 emitted from a semiconductor laser 2ʹ is reflected by a beam splitter 3 and then focused by a lens system 4 onto a recording element 1-1 (which is hereinafter referred to as a recording bit) on the recording media 1, While applying a magnetic bias field perpendicularly to the recording bit by applying a current through an electromagnetic bias coil 5, the light beam 2 is radiated onto the recording bit until the recording bit is heated as high as approximately the Curie point of the material. Thus, the direction of the applied magnetic bias field is recorded as a remnant magnetization in the recording bit when the recording bit is cooled by cutting the light radiation. Therefore, a continuous light radiation onto the recording bit with the constant magnetic bias field applied thereto makes the recording media 1 be uniformly magnetized perpendicularly. Thus, the previous data recorded thereon are all erased. Writing a new data on the erased recording media 1 is carried out as follows: Direction of the current application through the electromagnetic coil 5 is reversed and the current is kept flowing therethrough on, in other words, the magnetic bias field is reversed. Then, the light source 2ʹ is energized according to the digital data to be recorded. When the light beam is radiated onto a recording bit to heat, the magnetization direction opposite to that of the previous state is newly recorded in this recording bit.

Reading out the data stored in the recording bit is carried out as follows: The light beam 2, which must be weak enough not to erase the recorded data during the reading process, is radiated onto a recording bit to be read out, while no magnetic field is applied thereto. Polarization angle of the reflected light from the light-radiated bit varies depending on the direction of the remnant magnetization in the light-radiated bit. This phenomena is known as a Kerr effect. Accordingly, detection of the polarization of the reflected light allows the detection of the recorded digital data.

The light source 2ʹ, the optical system 4 for focusing the light and the coil 5 are installed on a carriage 6 to move to roughly trace a track of the disk. A tracking servo mechanism of the optical system 4 to precisely trace a particular track is also installed on the carriage, but is not shown in the figure for simplifying the drawing.

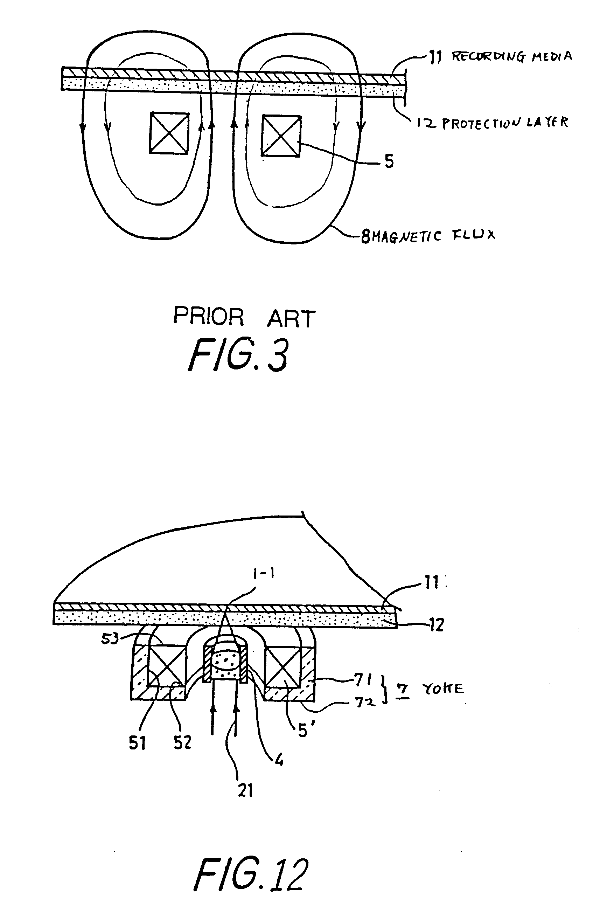

A configuration of the recording media (disk) 1, optical system 4 and a prior art bias coil having no yoke, nor core, is schematically illustrated by a cross-sectional view in FIG. 2. The recording media 1 comprises a recording layer 11 formed of a perpendicular magnetic anisotropic material, and a protection layer 12 formed of a transparent material, such as glass. The optical system 4 is composed of an outer cylinder 41 and a plurality of lenses 42. Thus, the laser light 21 emitted from the light source 2ʹ is focused onto the recording bit 1-1 on the recording layer 11. The bias coil 5 is so-called a solenoid coil wound in a shape of cylinder. The bias coil is required to produce a magnetic field intensity of, for example, 2,39·10⁴ A/m (300 Oe) perpendicularly at the recording bit 1-1. The magnetic flux by this coil is schematically illustrates by the numeral 8 in FIG. 3. The protection layer 12 is typically as thick as 1.2 mm, and an air gap of typically 1 mm is provided between the protection layer 12 and the end of the bias coil to leave a margin for thermal deformation, etc. Therefore, a large current is required to flow in the coil in order to produce the required amount of the magnetic field intensity at the recording bit. However, the larger current causes the larger temperature rise of the coil. On the other hand, in the practical apparatus, the temperature rise is a prior design limitation. Accordingly, an improvement of the coil efficiency has been seriously requested.

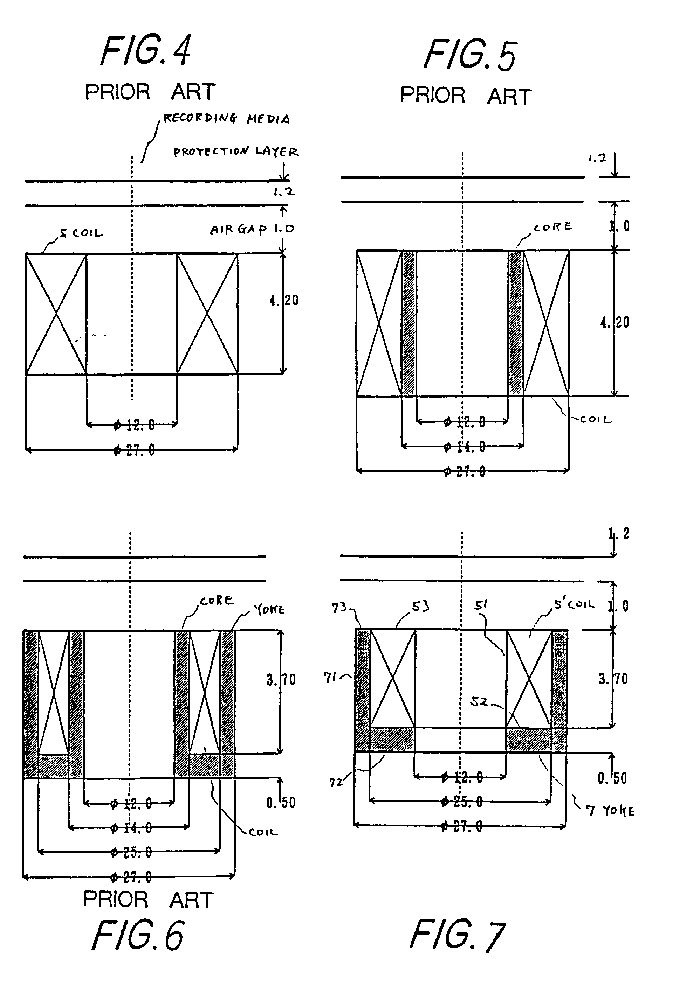

In order to solve this problem, there have been proposed some ideas, such as providing a magnetic core in the inner diameter of the coil by Tanaka in the Japanese unexamined utility patent publication Sho 60-47107, or providing a magnetic yoke as well as a magnetic core around the coil by Tanaka in the Japanese unexamined patent publication Sho 60-29904. Configuration of of these structures are shown as cross-sectional views in FIG. 5 and 6, respectively. The prior art coil having no yoke, nor core, of FIG. 3 is also shown in FIG. 4 for comparison.

Other methods in which another magnetization device is provided at the opposite position with respect the recording disk 1 have been proposed, such as by Okada in the Japanese unexamined patent publication Sho 61-3224, or by Shinbara in the Japanese unexamined patent publication Sho 60-117403. However, in the latter two configurations the magnetization device obstructs the installation of the optical system; therefore these configurations do not meet the recent trend, which is explained later, that both the surfaces of the disk is utilized in order to increase the recording capacity of a single disk. Therefore, no more description of the latter two types is referred to here in the prior art explanation.

The space allowed for the coil and the yoke to occupy is limited by other peripheral devices. The dimensions of the allowed space are: for example, 27 mm in outer diameter; and 12 mm in inner diameter, which are common to all the coils of FIG. 4 through 6. Accordingly, the space occupied by the yoke or by the core reduces the space for the coil, resulting in a change of the number of turns of the coil. The change of the coil turns also changes electrical resistance of the coil, the magnetic field intensity at the recording bit, power consumption of the coil, and magnetic field intensity per power consumption. These parameters are shown in Table 1. The data shown therein are at the condition that the recording bit is located 2.2 mm from the coil's flat end facing the disk.

It is usual to provide the recording layers on both the surfaces of the disk in order to enhance the recording capacity of the disk; then, two sets of the coils (and the yokes) of FIG. 4, 5 or 6 together with the optical system 4 are provided in symmetry with respect to the disk surfaces. Number of turns of the coil, the electrical resistance of the coil, the magnetic field intensity at the recording bit, power consumption of the coil, and magnetic field intensity per consumption power are shown in Table 2.

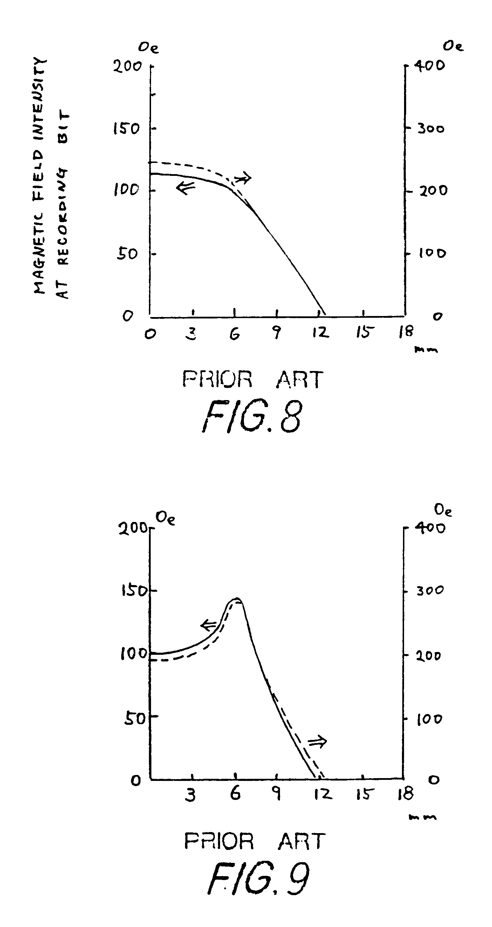

When a constant current 0.25 A is applied to flow through each of these coils of FIG. 4 through 6, the distribution of the magnetic field intensity on the recording media is shown respectively in FIG. 8 through 10, where the horizontal axis shows a distance from the position of the recording bit, i.e. the intersection of the coil axis and the media surface, toward a radial direction. In these figures, the solid lines, relating to the left hand side scale, show the magnetic field intensity by the single coil (and the core/yoke), and the dotted lines, relating to the right hand side scale, show the magnetic field intensity by two coils (and the core/yoke). In these data it is observed that, with the coil of FIG. 5 or 6, where the magnetic core is provided along the inner diameter of the coil, the magnetic field intensity at the recording bit rather decreases though the magnetic field intensity near the core is considerably increased. These values as well as the shapes of the magnetic field distribution curve vary depending on the shape of the coil, the yoke, the thickness of the protection coating and the air gap. Data for achieving the required 2,39·10⁴ A/m (300 Oe), for example for camparision, by incresing coil current are shown in Table 3 for single coil and Table 4 for two coils. Thus, it is apparent that the magnetic field intensity at the recording bit can not be easily increased without un-negligible temperature rise of the coil in a practical apparatus.

### SUMMARY OF THE INVENTION

It is a general object of the invention, therefore, to enhances the magnetic field intensity at the the recording bit of a magneto-optical recording disk.

It is another object of the invention to reduce a heat dissipation in the electromagnetic bias coil.

A magnetic bias coil according to the present invention is characterised in that the magnetic yoke only surrounds the coil's outer round side and the coil's flat side opposite from the recording disk. The part of the yoke, on the flat side of the coil, is provided with an opening through which the light beam or the optical system is arranged.

The present invention will be more fully described hereinafter with reference to the accompanying drawings, wherein like numerals refer to like parts throughout.

### BRIEF DESCRIPTION OF THE DRAWINGS

FIG. 1 schematically illustrates a configuration of a prior art magneto-optical recording disk apparatus.

FIG. 2 schematically illustrates a cross-sectional view of the optical system and the prior art electromagnetic bias coil having no yoke nor core.

FIG. 3 schematically illustrates a magnetic flux of the prior art electromagnetic bias coil of FIG. 2.

FIG. 4 schematically illustrates dimensions of the prior art electromagnetic bias coil having no yoke.

FIG. 5 schematically illustrates structure and dimensions of a prior art electromagnetic bias coil having a magnetic core therein.

FIG. 6 schematically illustrates structure and dimensions of a prior art electromagnetic bias coil having a magnetic yoke and core.

FIG. 7 schematically illustrates structure and dimensions of the electromagnetic bias coil of the present invention having a magnetic yoke.

FIG. 8 shows distribution of magnetic field intensity along the surface of the recording media when the prior art electromagnetic bias coil(s) of FIG. 4 is used.

FIG. 9 shows distribution of magnetic field intensity along the surface of the recording media when the prior art electromagnetic bias coil(s) of FIG. 5 is used.

FIG. 10 shows distribution of magnetic field intensity along the surface of the recording media when the prior art electromagnetic bias coil(s) of FIG. 6 is used.

FIG. 11 shows distribution of magnetic field intensity along the surface of the recording media when the electromagnetic bias coil(s) of FIG. 7 of the present invention is used.

FIG. 12 shows a magneto-optical recording disk apparatus using a bias coil of of FIG. 7 of the present invention.

FIG. 13 schematically illustrates magnetic flux by the electromagnetic bias coil of the present invention.

FIG. 14 schematically illustrates two symmetric coils with respect to the recording disk, according to the present invention.

### DESCRIPTION OF THE PREFERRED EMBODIMENTS

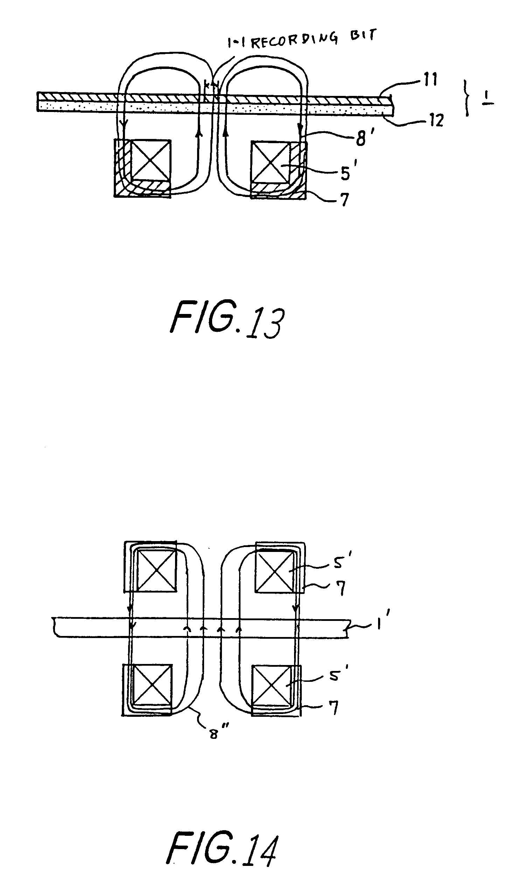

A configuration of a preferred embodiment of the present invention is schematically illustrates in FIG. 12, the dimension of the electromagnetic bias coil used therein is shown in FIG. 7. In these figures, the same parts shown in the figures for the prior art explanation is denoted with the same numerals.

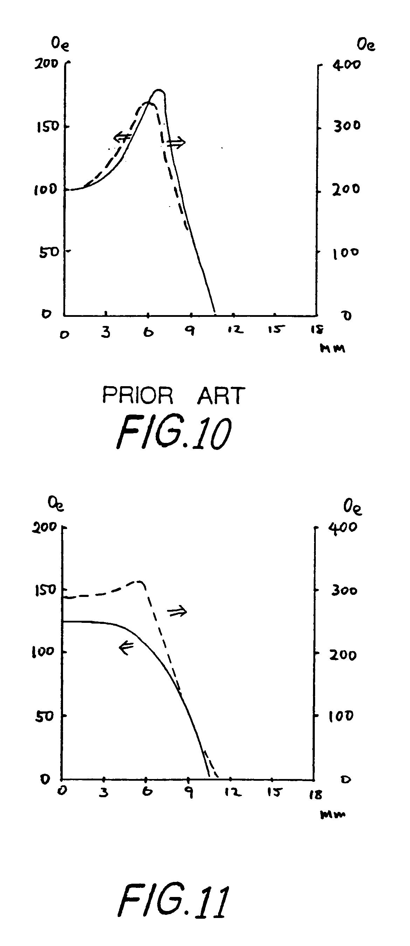

According to the present invention, the electromagnetic bias coil is provided with a magnetic yoke 7 made of soft iron. The yoke 7 is consist of a part 71 which surrounds the round outer diameter 51 of the coil 5ʹ and a part 72 which covers the coil's flat side 52 opposite from the disk side. At the central portion of the yoke part 72 on the flat side 52 of the coil there is provided a hole through which the light beam or the optical system is arranged. The soft magnetic material is a material having a very large magnetic permeability but has very little remnant magnetization. Permeability of soft iron is as large as 1200. A soft ferrite or silicon steel can also be used for this yoke 7. In FIG. 13, compared with the flux of FIG. 3, the magnetic flux 8ʹ outside the coil sides 51 and 52 are absorbed by the yoke 7. This is because the high permeability of the yoke material reduces the magnetic resistance of the magnetic circuit. The reduced magnetic resistance of the magnetic circuit excited by the coil 5ʹ increases the magnetic flux. Consequently, the flux flowing through the recording bit is also increased. This means the magnetic field intensity at the recording bit is increased. The coil 5ʹ with the yoke 7 may be additionally provided at a symmetric position with respect to the recording disk 1 as shown in FIG. 14, in which the magnetic flux are denoted with the numeral 8ʺ. The additional coil 5ʹ is by the use of the coil for recording/ erasing the recording bit on the opposite side of the disk provided for enhancing the disk's recording capacity. Distribution of the magnetic field intensity along the surface of the recording media 1 is shown in FIG. 11, where the solid line shows the magnetic field intensity by the single coil, as well as the dotted line shows the magnetic field intensity by the symmetric two coils. The magnetic field intensity distribution curve for the symmetric two coils (the dotted line) in FIG. 11 shows that there is some dip at the centre, i.e. at the recording bit, in other words, the peak is located at 5 mm; however, the merit of the yoke results in the increase of the magnetic field intensity at the centre.

The beneficial effect of the magnetic yoke 7 of the present invention is shown in Table 1 through 4 and FIG. 11 for comparison with the prior art coils. When the coils are driven with a constant current of 0.25 A, the results are shown in Table 1 for a single coil and in Table 2 for two coils symmetrically arranged with respect to the recording disk 1. The coil of the present invention shows the highest magnetic field intensity at the recording bit. However, the amount is less than the above-described minimum requirement 300 Oe with the current of 0.25 A, even if two coils are used. The amount of the coil current does not change the shape of the magnetic field distribution curve, but only changes the height of the curve in proportion to the coil current. Accordingly, the current in each coil is increased so as to achieve the required 2,39·10⁴ A/m (300 Oe), as shown in Table 3 for the single coil as well as in Table 4 for the symmetric two coils. It is seen in these tables that the required coil current is less than 90 % of those of the prior art coils, and the power consumption is less than 75 % of the prior art coils, and the temperature rise is as low as 45 °C for two coils compared with more than 85 °C of the prior art coils.

The power consumption in the coil is proportional to the square of the amount of the current flowing therethrough, the temperature rise of the coil increases the coil resistance which also increases the power consumption. Therefore, variation of the required current value, even if it is small amount, its effect is considerable.

Though in FIG. 7 the flat end 73 of the outer round side 71 of the yoke 7 is coplanar with the flat end 53 of the coil 5ʹ, these ends do not have to be coplanar with each other, for pursuing the best condition of the flux distribution. Though in FIG. 7 the diameter of the opening in the flat portion 72 of the yoke 7 coincides with the inner diameter of the coil 5ʹ, these diameters do not have to be always equal, for pursuing the best condition of the flux distribution.

Though in the description of the preferred embodiment the referred coil size is 27 mm in the outer diameter as well as 12 mm in the inner diameter, it is apparent that the present invention is applicable to any other coil size.

Though in the description of the preferred embodiment the required magnetic field intensity is 2,39·10⁴ A/m (300 Oe) mimimum, this value is now extensively improved to be much less; accordingly, it is apparent that the present invention is applicable to such a recording media requiring much less magnetic field intensity, such as 1,2·10⁴ A/m (150 Oe), for recording/erasing data thereon, where two coils are not required.

The yoke provided by the present invention can also function to be a magnetic shield which prevents magnetic interaction between the bias coil 5 and magnetic system for focusing and servo tracking the optical heads.

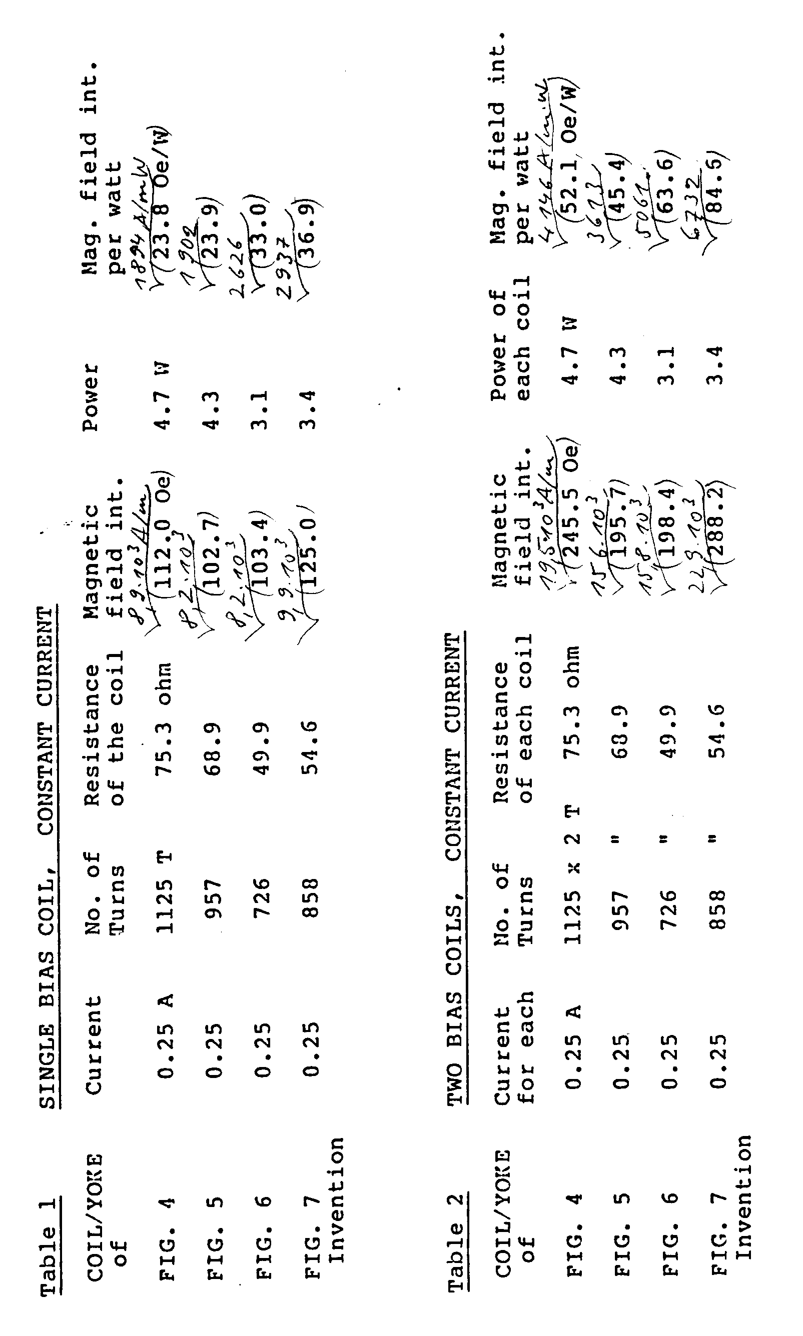

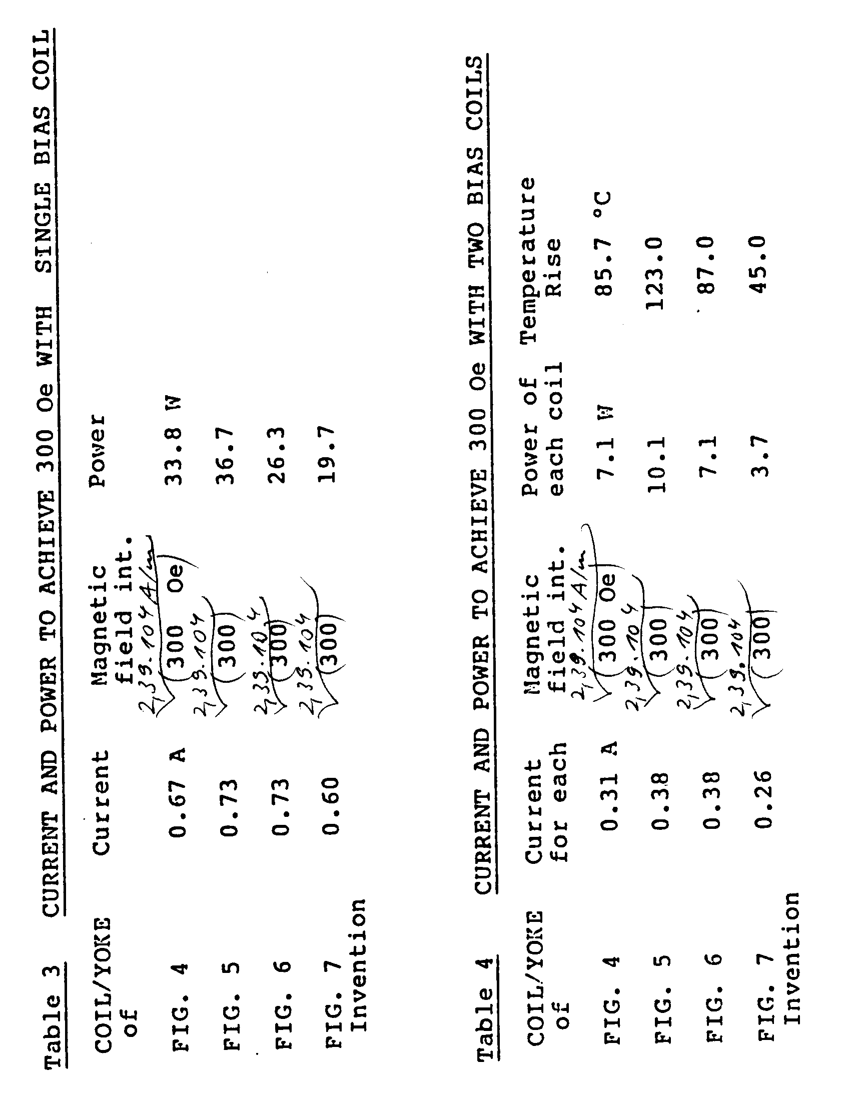

## Claims

1. A magneto-optical recording disk apparatus having: a recording disk (1) having a perpendicular magnetic anisotropic material (11) thereon;
an electromagnetic bias coil (5) for applying a magnetic field to a recording bit (1-1) of said perpendicular magnetic anisotropic material (11), the magnetic field (8) being perpendicular to the surface of the recording disk (1); and
an optical system for focusing a light beam (21) onto the recording bit (1-1), the optical system being located on the same side of the recording disk (1) as the electromagnetic bias coil (5) and being coaxial with the electromagnetic bias coil (5),
a magnetic yoke (7), made of a soft magnetic material,
characterized in that said magnetic yoke (7) only surrounds the coil's (5) outer round side (51) and the coil's (5) flat side (52) opposite to the recording disk (1), said flat side portion (72) of said yoke (7) having an opening through which the optical system is arranged,
whereby the current through the electromagnetic coil (7) necessary to produce the magnetic field (8) to the recording bit (1-1) is reduced.

2. An apparatus of claim 1, characterized in that said soft magnetic material is chosen from a group of soft iron, silicon steel and soft ferrite.

3. An apparatus of claim 1 or 2, characterized in that a set consisting of the electromagnetic bias coil (5) comprising said magnetic yoke (7) is provided at one side of the recording disk (1).

4. An apparatus of claim 1 or 2, characterized in that two sets each consisting of an electromagnetic bias coil (5) comprising said magnetic yoke (7) are provided in symmetry with respect to the recording disk (1).

## Patentansprüche

1. Magnetooptische Platten-Aufzeichnungsvorrichtung mit einer Aufzeichnungsplatte (1), auf welcher ein in senkrechter Richtung magnetisches anisotropes Material aufgebracht ist,
einer elektromagnetischen Vormagnetisierungsspule zum Anlegen eines magnetischen Feldes an ein Aufzeichnungs-Bit (1-1) des genannten in senkrechter Richtung magnetischen anisotropen Materials (11), wobei das magnetische Feld (8) senkrecht zur Oberfläche der Aufzeichnungsplatte (1) verläuft, und
mit einem optischen System zur Fokussierung eines Lichtstrahls (21) auf das Aufzeichnungs-Bit (1-1), wobei das optische System auf derselben Seite der Aufzeichnungsplatte (1) wie die elektromagnetische Vormagnetisierungsspule (5) angeordnet ist und koaxial zur elektromagnetischen Vormagnetisierungsspule (5) liegt,
einem aus weichmagnetischen Material hergestellten magnetischen Joch (7),
dadurch gekennzeichnet, daß das genannte magnetische Joch (7) nur die äußere runde Seitenfläche (51) der Wicklung (5) und die der Aufzeichnungsplatte (1) abgewandte flache Seitefläche (52) der Wicklung (5) umgibt, daß das flache Seitenteil (72) des genannten Jochs (7) eine Öffnung aufweist, durch welche das optische System eingerichtet ist,
wodurch der Strom durch die elektromagnetische Spule (5), der erforderlich ist, ein Magnetfeld (8) für das Aufzeichnungs-Bit (1-1) zu erzeugen, reduziert wird.

2. Vorrichtung nach Anspruch 1, dadurch gekennzeichnet, daß das genannte weichmagnetische Material aus einer Gruppe von Weicheisen, Siliziumstahl und Weichferriten ausgewählt ist.

3. Vorrichtung nach Anspruch 1 oder 2, dadurch gekennzeichnet, daß eine Einheit, bestehend aus der elektromagnetischen Vormagnetisierungsspule (5) mit dem genannten magnetischen Joch (7), auf einer Seite der Aufzeichnungsplatte (1) vorgesehen ist.

4. Vorrichtung nach Anspruch 1 oder 2, dadurch gekennzeichnet, daß zwei Einheiten, welche aus einer elektromagnetischen Vorspannungsspule (5) mit dem genannten magnetischen Joch (7) bestehen, in Symmetrie hinsichtlich der Aufzeichnugsplatte (1) vorgesehen sind.

## Revendications

1. Dispositif de disque d'enregistrement magnéto-optique comportant :
un disque d'enregistrement (1) comprenant un matériau anisotrope magnétique perpendiculaire (11) sur lui :
une bobine de polarisation électromagnétique (5) pour appliquer un champ magnétique à un bit d'enregistrement (1-1) dudit matériau anisotrope magnétique perpendiculaire (11), le champ magnétique (8) étant perpendiculaire à la surface du disque d'enregistrement (1) ;
un système optique pour focaliser un faisceau de lumière (21) sur le bit d'enregistrement (1-1), le système optique étant placé sur le même côté du disque d'enregistrement (1) que la bobine de polarisation électromagnétique (5) et étant coaxial à la bobine de polarisation électromagnétique (5) ; et
une culasse magnétique (7) réalisée en un matériau magnétique doux ;
caractérisé en ce que ladite culasse magnétique (7) entoure seulement le côté périphérique externe (51) de la bobine (5) et le côté plat (52) de la bobine (5) opposé au disque d'enregistrement (1), ladite partie de côté plat (72) de ladite culasse (7) comportant une ouverture au travers de laquelle le système optique est agencé ;
d'où il résulte que le courant qui traverse la bobine électromagnétique (7) et qui est nécessaire pour produire le champ magnétique (8) pour le bit d'enregistrement (1-1) est réduit.

2. Dispositif selon la revendication 1, caractérisé en ce que ledit matériau magnétique doux est choisi parmi un groupe qui comprend un fer doux, un acier au silicium et une ferrite douce.

3. Dispositif selon la revendication 1 ou 2, caractérisé en ce qu'un ensemble constitué par la bobine de polarisation électromagnétique (5) qui comprend ladite culasse magnétique (7) est prévu au niveau d'un côté du disque d'enregistrement (1).

4. Dispositif selon la revendication 1 ou 2, caractérisé en ce que deux ensembles, chacun étant constitué par une bobine de polarisation électromagnétique (5) qui comprend ladite culasse magnétique (7), sont prévus de façon symétrique par rapport au disque d'enregistrement (1).
